**Europäisches Patentamt**

**European Patent Office**

**Office européen des brevets**

(19)

(11) Veröffentlichungsnummer: **0 526 808 B1**

## (12) EUROPÄISCHE PATENTSCHRIFT

(45) Veröffentlichungstag der Patentschrift: **20.09.95**

(51) Int. Cl.⁶: **B65G 53/24**, G21C 21/02

(21) Anmeldenummer: **92112544.9**

(22) Anmeldetag: **22.07.92**

(54) **Verfahren und Vorrichtung zum Fördern von Pulver.**

(30) Priorität: **05.08.91 DE 4125938**

(43) Veröffentlichungstag der Anmeldung:
**10.02.93 Patentblatt 93/06**

(45) Bekanntmachung des Hinweises auf die
Patenterteilung:
**20.09.95 Patentblatt 95/38**

(84) Benannte Vertragsstaaten:
**BE DE FR GB**

(56) Entgegenhaltungen:
**CH-A- 656 370
DE-A- 2 515 729
DE-A- 3 545 494**

(73) Patentinhaber: **SIEMENS AKTIENGESELL-
SCHAFT
Wittelsbacherplatz 2
D-80333 München (DE)**

(72) Erfinder: **Adelmann, Manfred
Heinr.-v.-Brentano-Strasse 17
W-6454 Bruchköbel (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und eine Vorrichtung zum Fördern von Pulver, insbesondere von Kernbrennstoffpulver für die Herstellung von Brennelementen. Die Erfindung geht aus von einem Verfahren mit den Merkmalen des Oberbegriffs des Anspruches 1, wie es in der DE-A- 35 45 494 beschrieben ist.

Bei derartigen Verfahren werden Pulver und Fördergas in das Vorderende einer Förderleitung eingeleitet, die von einer Abgabestation zu einer Sammelkammer in einer Auffangstation führt, und durch einen Druckunterschied zwischen dem eingeleiteten Luftstrom oder einem anderen Fördergas einerseits und der Füllung der Sammelkammer andererseits gefördert. Entsprechende Vorrichtungen enthalten daher eine Abgabestation mit einem Ansaugraum, einer Pulver-Einfüllöffnung am Ansaugraum und einer in den Ansaugraum mündenden Fördergaszuleitung mit einem Fördergasventil, ferner eine Auffangstation mit einer Sammelkammer, die in der Regel eine Fördergasableitung mit einem Pulverventil enthält, eine den Ansaugraum mit der Sammelkammer verbindende Förderleitung sowie eine Pumpe oder entsprechende Mittel zum Erzeugen eines Druckunterschiedes zwischen der Fördergaszuleitung und der Sammelkammer.

Bei der Vorrichtung nach der DE-A- 35 45 494 ist die Pumpe an die Fördergas-Ableitung der Sammelkammer angeschlossen und erzeugt dort während des Förderbetriebes ständig einen Unterdruck. Das Vorderende der Förderleitung führt von der Einmündung der Fördergaszuleitung bis zum Boden eines mit dem Pulver gefüllten Abgabebehälters, in den ein Frischluftrohr mit einem weiteren Absperrventil ragt. Ist das Fördergasventil geschlossen und das Ventil am Frischluftrohr geöffnet, so wird durch den Unterdruck in der Sammelkammer die Pulverfüllung in den Raum zwischen dem Ende des Frischluftrohres und dem Abgabebehälter-Boden sowie das Vorderende der Förderleitung gesaugt, so daß diese Teile den Ansaugraum für das zu fördernde Pulver bilden. Der trichterförmige Übergang des Abgabehälters in den Ansaugraum mit der Mündung des Frischluftrohres stellt also die Pulver-Einfüllöffnung dieses Ansaugraumes dar und ist durch Schließen des Sperrventils praktisch verschließbar.

Beim Ansaugen bildet sich ein über die Fördergaszuleitung hinaus in die Förderleitung ragender Pulverpfropfen, der im nächsten Arbeitstakt an der Mündung der Fördergaszufuhr abreißt und wegen des Unterdrucks in der Sammelkammer zusammen mit Fördergas durch die Förderleitung befördert wird, sobald das Fördergasventil geöffnet ist. Während dieses Arbeitstaktes ist dann, vor allem wenn das Ventil am Frischluftrohr gesperrt gehalten wird, ein weiterer Transport von Pulver in den Ansaugraum unterbunden. Auf einen durch die Leitung gesaugten Pulverpfropfen folgt daher stets ein Fördergas-Puffer.

Bei dieser Pfropfenförderung wird also während eines ersten Arbeitstaktes eine in einen Ansaugraum am Vorderende der Förderleitung mündende Fördergaszuleitung gesperrt und der Ansaugraum mit zu förderndem Pulver gefüllt, was zum Beispiel durch einen Saugdruck in der Sammelkammer oder auf andere geeignete Weise geschehen kann. Anschließend wird die Fördergaszuleitung geöffnet, wobei in der Förderleitung und in der Sammelkammer ein gegenüber dem Druck in der Fördergaszuleitung erniedrigter Druck aufrechterhalten oder neu erzeugt wird, falls er während des ersten Arbeitstaktes zusammengebrochen sein sollte. Daran schließt sich der eigentliche Fördertakt an, bei dem in der Sammelkammer ein niedriger Druck aufrechterhalten und das zu fördernde Pulver mittels des aufrechterhaltenen Druckunterschiedes durch die Förderleitung und eine in die Sammelkammer führende Austrittsöffnung an ihrem Hinterende hindurch in die Sammelkammer gefördert wird.

Bei diesem Stand der Technik ist vorgesehen, die Fördergaszuleitung und das in den Abgabebehälter mündende Frischgasrohr in einem vorgegebenen Zeit-Takt abwechselnd zu öffnen, ohne die Ankunft des Pulverpfropfens in der Sammelkammer abzuwarten. Daher befindet sich während des Betriebes in der Förderleitung eine Kette von Pfropfen mit dazwischenliegenden Fördergas-Puffern.

Diese Pfropfenförderung ist für den Transport von Kernbrennstoffpulver insofern angepaßt, als innerhalb eines Pfropfens keine wesentlichen Relativbewegungen der einzelnen Pulverkörner stattfindet, so daß sich die einzelnen Pulverkörner, deren spezifisches Gewicht unter Umständen sehr verschieden sein kann, nicht entmischen. Bei der Herstellung von Brennelementen für Kernreaktoren werden nämlich unterschiedliche Pulversorten, z.B. $UO_2$, $PuO_2$, Zusatzstoffe wie z.B. Stearate, Mischungen dieser Stoffe (insbesondere Rücklaufmaterial aus bei der weiteren Verarbeitung entstandenen Mischungen dieser Stoffe) verwendet, wobei insbesondere eine als "Mastermix" bezeichnete, sehr feinkörnige Pulvermischung aus 70 % $UO_2$ und 30 % $PuO_2$ Probleme aufwirft. Für die Herstellung von Brennelementen ist daher ein Transportsystem aus Förderleitungen wünschenswert, die die verschiedenen Verarbeitungsstationen (Mahlwerke, Mischwerke, Analysenstationen, Pulverpressen etc.) miteinander verbinden, ohne daß dabei größere Umrüstungen im Transportsystem erforderlich sind, wenn die Pulversorten oder die Konfiguration der Verarbeitungsstationen geändert werden muß. Lediglich die Förderleistung der Pumpe sollte nach vorgegebenen Parametern (z.B. die Beschaffenheit des gewünschten Pulverstromes) dabei noch veränderlich sein.

Würden derartige Pulvermischungen nach dem Staubsaugerprinzip einfach mittels eines Luftstromes durch die Förderleitung geblasen, so treten in einem derartigen Wirbelbett oder Fließbett Entmischungen zwischen den leichteren und schweren und zwischen den größeren und kleineren Pulverteilen auf. Für Brennelemente wird aber eine hohe Homogenität des Brennstoffes gefordert.

Die Pfropfenförderung kommt außerdem nur mit etwa 1 % des Luftvolumens aus, das nach dem Staubsaugerprinzip erforderlich wäre. Dadurch ist die Entsorgung der Förderluft wesentlich erleichtert. Ein besonderes Problem bei der Pulverförderung entsteht aber, wenn Höhenunterschiede zu überwinden sind. Große Steigungen erfordern hohe Leistungen der Pumpe, während bei Gefällen die Gefahr besteht, daß die Pulverpfropfen von selbst ins Rutschen kommen und daher die für das Ansaugen der Pulverpfropfen erforderlichen Druckverhältnisse und die für den reibungslosen Transport nötige Folge von Pfropfen und Luftpolstern durcheinander gerät. Schlägt das Pulver auf das Ende des Gefälles auf, so bleibt fast stets ein Teil liegen und behindert nach kurzer Zeit den Transport der nachfolgenden Pfropfen. Es kommt daher häufig zu Verstopfungen, die zwar gelöst werden können, wenn die Förderleitung geflutet und mechanisch abgeklopft wird, wobei dann alle Pfropfen zerfallen und durch einen entsprechend hohen Saugdruck zunächst mit dem nächsten Pfropfen abgesaugt werden müssen. Treten derartige Verstopfungen aber an unzugänglichen Stellen auf oder kann bei hochradioaktivem Material an den Leitungen nicht manipuliert werden, so ist dieses Verfahren praktisch nicht mehr anwendbar.

Der Erfindung liegt daher die Aufgabe zugrunde, eine möglichst universelle, möglichst auch den besonderen Bedürfnissen einer Kernbrennstoffherstellung entsprechende Pulverförderung zu ermöglichen.

Diese Aufgabe wird gelöst durch die im Kennzeichen des Anspruches 1 angegebene Weiterbildung des bekannten Verfahrens. Hierzu dient eine Vorrichtung mit den Merkmalen des Anspruches 16.

Gemäß der Erfindung wird also die Fördergaszuleitung, die nach der Pfropfenbildung geöffnet wird, solange geöffnet und auf einem gegenüber der Sammelkammer erhöhten Druck gehalten und das Fördergas mindestens solange zugeführt, bis das den Pfropfen bildende Pulver die Förderleitung durchlaufen und das Hinterende der Förderleitung erreicht hat.

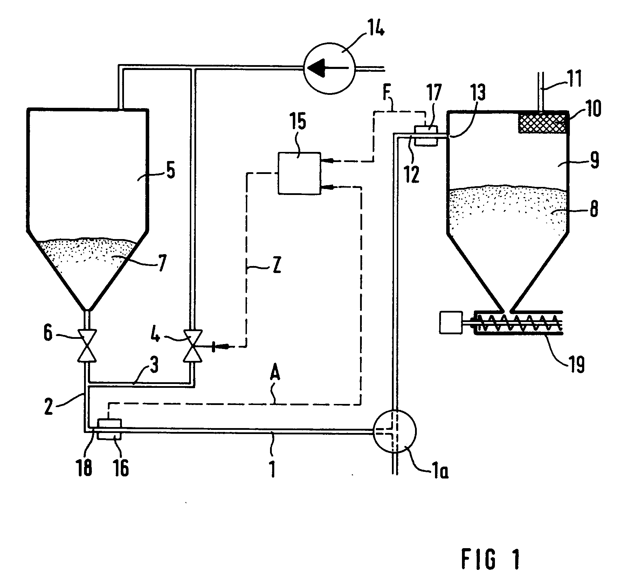

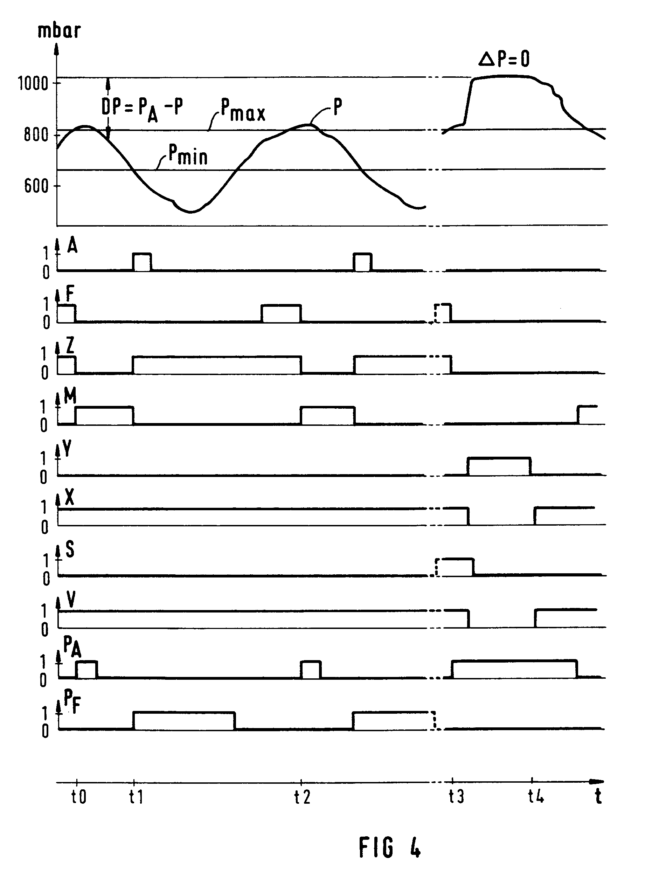

Vorteilhafte Weiterbildungen des Verfahrens und der Vorrichtung sind in den Unteransprüchen gekennzeichnet. Anhand von drei in den Figuren 1 bis 3 dargestellten Ausführungsbeispielen und der in Figur 4 dargestellten Signalverläufe wird die Erfindung näher erläutert.

Beim Ausführungsbeispiel nach Figur 1 ist im linken Teil die Abgabestation angeordnet, die über die Förderleitung 1 mit der Auffangstation im rechten Teil der Figur verbunden ist. Das Vorderende 2 der Leitung, in das eine Fördergas-Zuleitung 3 mit einem Absperrventil 4 mündet, dient als Ansaugraum, in den bei geöffnetem Ventil 4 und entsprechender Druckdifferenz Fördergas einströmt, während bei geschlossenem Ventil 4 das Pulver 7 aus einem Abgabebehälter 5 und eine geöffnete Pulversperre 6 eintritt und das Vorderende 2 der Förderleitung füllt. Das geförderte Pulver 8 wird in der Sammelkammer 9 aufgefangen, die an einem oberen Teil eine ein Pulverfilter 10 enthaltende Gas-Ableitung 11 und einen an ein Hinterende 12 der Förderleitung 1 angeschlossenen Einlaß 13 aufweist.

Eine Pumpe 14 erzeugt eine Druckdifferenz DP = P(A)- P(F) zwischen dem Druck P(A) am Absperrventil der Fördergaszuleitung und dem Druck P(F) in der Sammelkammer, wobei beim Ausführungsbeispiel der Figur 1 die Pumpe 14 z.B. ein Kompressor sein kann, dessen Druckleitung sowohl in den Abgabebehälter 5 als auch zum Absperrventil 4 führt und dort jeweils einen Überdruck erzeugt und aufrecht erhält. Die Öffnung am Boden des Abgabebehälters, über die der Ansaugraum 2 mit Pulver gefüllt wird, ist dabei zwar stets mit Pulver gefüllt, da aber bei geöffnetem Ventil 4 ein Überdruck auf der Fördergaszuleitung herrscht, ist die Pulverzufuhr auch bei geöffneter Pulversperre 6 praktisch unterbrochen, so daß diese Pulver-Einfüllöffnung automatisch sperrt. Bei gesperrtem Fördergasventil 4 ist dagegen ein ordnungsgemäßes Füllen des Ansaugraumes sichergestellt.

Das Absperrventil 4 wird mittels eines Steuersignales Z aus einer Steuereinrichtung 15 betätigt, die mit Mitteln zusammenarbeitet, die das Füllen des Ansaugraumes überwachen und den Durchtritt von gefördertem Pulver durch den Durchlaß 13 zur Sammelkammer melden. Diese Mittel können z.B. aus kapazitiven Meßgliedern 16 und 17 bestehen, deren Ausgangssignal A überwacht, daß sich am Ort des Meßgliedes 16 ein Pfropfen gebildet hat, während das Ausgangssignal F angibt, ob ein Pfropfen das Hinterende 12 der Förderleitung erreicht.

Durch dieses Überwachungs- und Meldesignal, das der Steuereinrichtung zugeführt ist, wird die Fördergaszuleitung jeweils solange offen gehalten, bis das den Pfropfen bildende Pulver durch den Einlaß durchgetreten ist.

Das zum Fördern des Pulvers benutzte Fördergas wird aus der Sammelkammer 9 über das Pulverfilter abgeführt, während die Druckdifferenz durch die Pumpe 14 erreicht wird, die vorteilhaft auch bei geschlossener Fördergaszuleitung weiterläuft. Die Pumpe kann jedoch zum Unterbrechen des Förderns, insbesondere bei Verfahrensstörungen oder bei Erreichen eines vorgegebenen Füllstandes in der Sammelkammer 9 stillgesetzt werden.

Für die Weiterverarbeitung des geförderten Pulvers kann die Sammelkammer 9 kontinuierlich geleert werden, was durch eine entsprechende Förderschnecke 19 in Figur 1 dargestellt ist. Trotzdem kann es erforderlich sein, gelegentlich das Fördern zu unterbrechen, um das Pulverfilter 10 zu entleeren oder Betriebsstörungen, z. B. Verstopfungen der Förderleitungen oder Überfüllungen der Sammelkammer, zu beseitigen. Bei solchen Unterbrechungen wird vorzugsweise die Pumpe 14 stillgesetzt.

Ferner ist mit 1a schematisch eine Abzweigung gezeigt, mit der z. B. Pulverproben entnommen oder andere Abgabe- oder Auffangstationen an die Förderleitung angeschlossen werden können.

Das Ausführungsbeispiel der Figur 1 arbeitet mit einem Überdruck in dem Abgabebehälter der Förderleitung und der Sammelkammer, der sowohl zum Füllen des Ansaugraumes 2 wie zum Fördern des Pulvers benutzt wird. Da also bei Undichtigkeiten Pulver austreten kann, kann es bei radioaktiven Materialien zu Sicherheitsproblemen kommen.

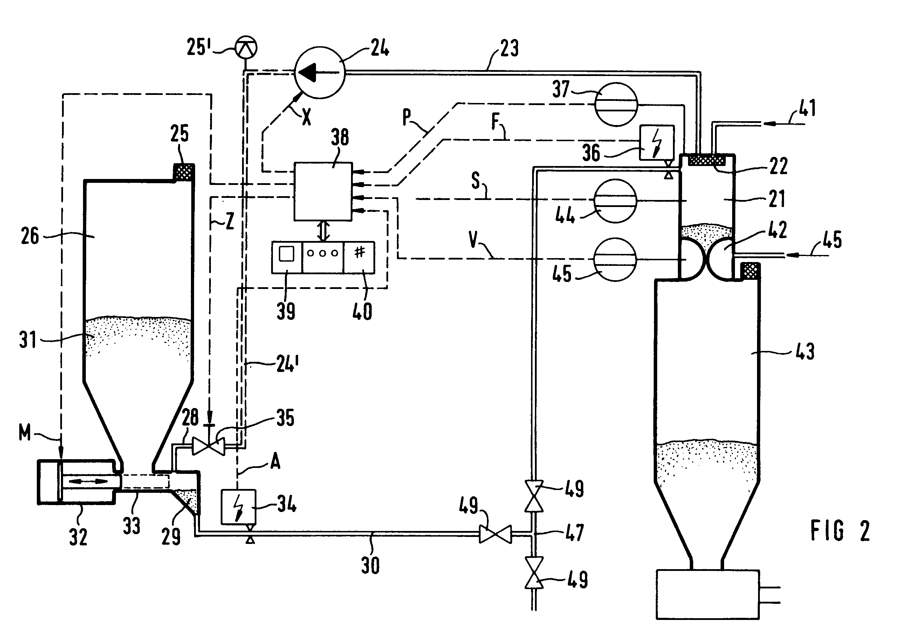

Figur 2 zeigt, daß eine Sammelkammer 21 über ein Pulverfilter 22 und eine Saugleitung 23 zur Pumpe 24 abgesaugt wird. Mit unterbrochenen Linien 24' ist dargestellt, daß durch Rückführen ein Kreislauf für das Fördergas entsteht, wobei die Pumpe 24 als Saugpumpe arbeitet. Ein Frischluftfilter 25 am Abgabebehälter 26 und ein Konstantdruck-Ventil 25' an der Leitung zum Fördergasventil sorgen dort dafür, daß der Druck im Abgabebehälter und auch in der Fördergaszuleitung 28 dem Umgebungsdruck in der Abgabestation entspricht.

Um einen Pulverpfropfen im Ansaugraum 29 am Vorderende der Förderleitung 30 zu erzeugen, wird das Pulver beim Ausführungsbeispiel der Figur 2 am Boden des das Pulver 31 enthaltenden Abgabebehälters 26 mechanisch entnommen, z. B. mittels eines Motors 32 und eines Schiebers 33, der das Pulver, das am Boden des Abgabebehälters 31 zunächst durch das Gewicht der Pulverfüllung zusammengepreßt ist und zu einer gewissen Klumpenbildung neigt, in den Ansaugraum 29 transportiert. Dieser Raum ist vom Gewicht der Pulverfüllung 31 entlastet. In ihn münden sowohl die Förderleitung als auch, vorzugsweise von oben, die Fördergaszuleitung 28. Ein derartiger Schieber unterbricht das Einfüllen des Pulvers in den Ansaugraum, sobald er stillgesetzt ist und kann daher - ähnlich wie dies bei Figur 1 beschrieben ist - die Pulver-Einfüllöffnung zum Ansaugraum versperren. Auch der Druck im Abgabebehälter 26 ist dadurch praktisch vom Druck in der Förderleitung und der Fördergaszuleitung entkoppelt und entspricht dem Atmosphärendruck der Abgabestation.

Eine Lichtschranke 34 gibt das Überwachungssignal A ab, wenn ausreichend Pulver den Ansaugraum füllt, so daß nun durch das Steuersignal Z das Fördergasventil 35 in der Fördergaszuleitung 28 geöffnet wird. Diese Lichtschranke ist am Vorderende der Förderleitung verschiebbar und gibt an, wie weit beim Ansaugtakt das Pulver in die Förderleitung angesaugt werden soll.

Ebenso gibt eine Lichtschranke 36 das Meldesignal F ab, sobald zu förderndes Pulver durch das Hinterende der Fördergaszuleitung hindurchgefördert ist. Dann wird über das Steuersignal Z das Fördergasventil in der Fördergaszuleitung wieder gesperrt.

Ferner ist vorgesehen, den Druck in der Sammelkammer 21 über einen entsprechenden Druckmesser 37 zu messen und ein entsprechendes Meßsignal P zu bilden. Dieses Meßsignal kann einerseits der Steuereinrichtung 38 zugeführt werden, andererseits zusammen mit den Überwachungs- und Meldesignalen A und F und/oder dem daraus gebildeten Steuersignal z einer optischen Anzeige 39 zugeführt werden, die (gegebenenfalls mit weiteren Zustandssignalen) den Betriebszustand der Anlage anzeigt. Vorteilhaft wird zumindest das Meßsignal und das Steuersignal fortlaufend in einen Speicher 40 eingelesen, in dem die eingelesenen Daten jeweils für eine vorgegebene Mindestzeit gespeichert werden, wobei diese Mindestzeit bei stillgesetztem Verfahren verlängert wird. Dadurch ist es möglich, bei Störungen des Betriebes die entsprechenden Betriebszustandsdaten auszulesen und die Vorgeschichte der Störung zurückzuverfolgen, wie dies z.B. bei Flugschreibern von Flugzeugen üblich ist.

Ist die Förderleitung 30 verstopft, so erzeugt die Pumpe 24 einen wachsenden Unterdruck in der Sammelkammer 21. Unterschreitet daher der Druck in der Sammelkammer 21 eine vorgegebene Untergrenze, so setzt vorteilhaft die Steuereinrichtung 38 das Verfahren still und die Pumpe 24 wird geflutet, so daß zumindest der Druck in der Förderleitung und der Sammelkammer dem Druck in der Fördergaszuleitung angeglichen wird. Sollten sich in der Förderleitung durch Ansammlung von Pulver Verstopfungen gebildet haben, so werden diese bei der Entspannung des Druckes in der Förderleitung aufgelöst, so daß beim anschließenden Wieder-Anlassen der Pumpe 24 die Leitung durch erneut angesaugtes Fördergas freigespült wird.

Insbesondere können derartige Unterbrechungen der Pulverförderung von Zeit zu Zeit vorgesehen sein, um das Pulverfilter 22, über das das durch die Förderleitung in den Sammelbehälter eingeströmte Fördergas aus der Sammelkammer 21 entfernt wird, in umgekehrter Richtung mit Druckgas zu durchspülen, wie durch den Pfeil 41 angedeutet ist.

Gemäß Figur 2 wird das Pulver beim Fördern durch das Hinterende der Förderleitung 30 hindurch in einen oberen Teil der Sammelkammer 21 geleitet. Es sammelt sich daher am Boden dieser Sammelkammer, an dem ein Pulverdurchlaßventil 42 angeordnet ist. Dieses Ventil trennt die Sammelkammer 21 von einer darunterliegenden Auffangkammer 43 und ist während des Förderns geschlossen gehalten. Ein Füllstandsanzeiger 44, der z.B. optisch oder kapazitiv arbeiten kann, erzeugt ein Füllstandssignal S, wenn in der Sammelkammer 21 ein vorgegebener Füllstand erreicht ist. Die Steuereinrichtung 38 unterbricht dann das Fördern (Abschalten der Saugpumpe 23) und öffnet das Pulverdurchlaßventil 42, so daß das in der Sammelkammer 21 enthaltene Pulver durch seine eigene Schwerkraft in die Auffangkammer 43 befördert wird.

Vorteilhaft wird das Pulverdurchlaßventil 42 mit Druckgas gesperrt, was durch den Pfeil 45 angedeutet ist. Ein derartiges druckgasbetätigtes Ventil ist aus der DE-A- 35 45 494 bekannt. Zum Öffnen des Pulverdurchlaßventils 42 wird das darin enthaltene Druckgas vorteilhaft verwendet, um gemäß dem Pfeil 41 das Pulverventil 22 zu spülen. Zur Steuerung dieses Vorganges ist ein Manometer 46 vorgesehen, aus dessen Druckmeßwert ein Ventilzustandssignal V für die Steuereinrichtung 38 gebildet wird. Die weitere Verarbeitung des geförderten Pulvers ist durch eine entsprechende Einrichtung 48 (z. B. eine zu einer Pulverpresse führende Förderschnecke) angedeutet.

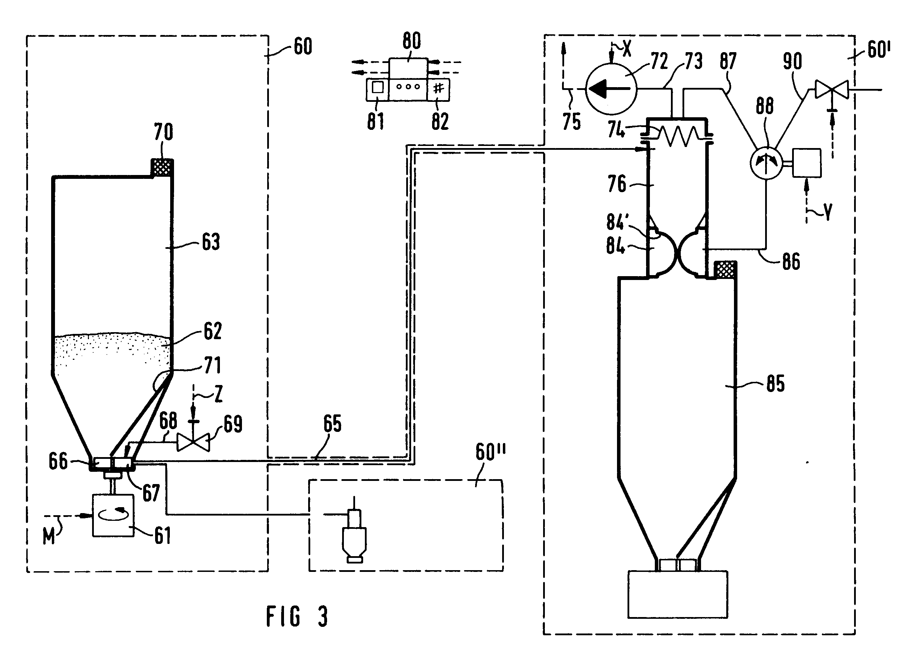

Ferner zeigen Figuren 2 und 3 eine Abzweigung ("Anschlußelement") mit einer Zweigleitung, bei der die von der Abzweigung abgehenden Leitungsteile durch eine Sperreinrichtung (z.B. eine Ventilanordnung 49) gestatten würden, z.B. statt des Pulvers aus einer Abgabestation ein anderes Pulver aus einer anderen Abgabestation in die Sammelkammer zu leiten. Hier ist die Abzweigung 47 verwendet, um das Pulver 31 statt in die Sammelkammer 21 in die Sammelkammer einer anderen Auffangstation zu lenken. Ferner sind Abzweigungen auch vorteilhaft, wenn zur Qualitätskontrolle von Zeit zu Zeit Proben aus dem geförderten Pulver entnommen und zur weiteren Analyse einem Probebehälter zugeführt werden sollen.

Einen Parallelbetrieb zweier im wesentlichen identischer Stationen mit gemeinsamer Gegenstation zeigt Figur 3, bei der die Stationen jeweils in einem Handschuhkasten 60, 60', 60'' angeordnet sind. Insbesondere kann aber statt der zweiten Auffangstation auch nur eine zweite Sammelkammer in der Auffangstation 60' vorgesehen sein, wobei beide Sammelkammern zur Beschleunigung des Transports auf einen gemeinsamen Auffangbehälter arbeiten können. Ein geeignetes Mittel, das das Füllen des Ansaugraumes 67 sicherstellt, ist dabei ein Motor 61 als mechanischer Antrieb beweglicher Teile. Diese Teile transportieren Pulver vom Boden eines die Pulverfüllung 62 enthaltenden Abgabebehälters 63 zum Vorderende einer Förderleitung 65, die in diesem Falle doppelt ausgebildet ist und zu zwei Abgabestationen führt.

Insbesondere können die mechanisch bewegten Teile ein Flügelrad enthalten, dessen Flügel am Boden des Abgabebehälters 63 nach oben offene Zwischenräume bilden, in die das Pulver 62 aufgrund seines Eigengewichtes hineingedrückt wird. Der Motor 61, dessen Getriebe an eine Antriebswelle des Flügelrades ankuppelbar ist, bewegt das Flügelrad und die von den Flügeln gebildeten, mit Pulver gefüllten Räume in den Ansaugraum 67, in den eine Fördergaszuleitung 68 mit einem absperrbaren Fördergasventil 69 einmündet. Vorteilhaft ist die Fördergaszuleitung 68 über das Ventil 69 zur Atmosphäre im Handschuhkasten 60 (Abgabestation) offen. Ist das Fördergasventil 69 während der Rotation des Flügelgrades 66 geschlossen, so liegt der Druck der Förderleitung 65 auch am Ansaugraum 67 an. Der Abgabebehälter 63 ist zur Umgebungs-Atmosphäre in der Abgabestation hin offen, wozu ein Frischgasfilter 70 im oberen Teil des Abgabebehälters vorgesehen ist. Dadurch ergibt sich am Vorderende der Förderleitung 65 ein Unterdruck, durch den das Pulver pfropfenförmig in dieses Vorderende hineingesaugt wird. Die Pfropfenbildung findet also nur statt, solange an der Leitung 65 Unterdruck anliegt. Dies ist im Hinblick auf die Betriebssicherheit vorteilhaft.

Das Flügelrad 66 arbeitet dabei als eine Art "Pulverfräse", die jeweils die unterste, am Boden des Abgabebehälters 63 liegende Pulverschicht abfräst und in den Ansaugraum 67 befördert, der durch eine Abdeckung oder Wand 71 vom Eigengewicht der Pulverfüllung 62 entlastet ist. Sollte dieses Eigengewicht daher in der Pulverfüllung zu Klumpen oder Pulverbrücken führen, so werden diese durch die Fräse aufgebrochen ohne sich in dem vom Druck entlasteten Raum 67 neu bilden zu können. Einzelheiten einer derartigen, besonders betriebssicheren Einfüllvorrichtung mit mechanisch bewegten Teilen sind in der gleichzeitig eingereichten Patentanmeldung "Verfahren und Vorrichtung zum Fördern von Pulver von einer Abgabestation zu einer Auffangstation" des gleichen Anmelders beschrieben, deren Inhalt der Beschreibung der Figur 3 zuzurechnen ist.

In der Auffangstation (Handschuhkasten 60') ist eine Pumpe 72 vorgesehen, die mit einer Saugleitung 73 an die Abgabeseite eines Pulverfilters 74 angeschlossen ist. Der Auslaß 75 der Pumpe 72 ist vorteilhaft zur Atmosphäre der Auffangstation hin offen, wobei das ausgestoßene Gas der Pumpe 72 über eine die Förderleitung 65 umgebende Schutzhülle in die Atmosphäre der Abgabestation 60 zurückgeführt werden kann. Das Pulverfilter 74 kann insbesondere aus einem mehrschichtigen Gewebe gefertigt und topfartig in das Innere der Sammelkammer ragen. Bevorzugt weist dieser Filtertopf einen mehrfach gefalteten Boden auf, während der Topfrand mittels dauerelastischen Kunststoff (z.B. zweikomponentiger Silikonkautschuk) zu einem Flansch vergossen sein kann, der in die Seitenwand einer Sammelkammer 76 eingepaßt ist.

Mit 80 ist eine Steuereinrichtung bezeichnet, die jeweils beim Öffnen des Ventils 69 in der Fördergaszuleitung 68 den Motor 61 stillsetzt und damit den Transport von Pulver aus dem Abgabebehälter 63 in den Ansaugraum 64 bzw. das Vorderende der Förderleitung 65 sperrt und umgekehrt durch Sperren der Fördergaszuleitung während des Pulvertransports aus dem Abgabebehälter 63 das Ansaugen des Pulvers und die Pfropfenbildung am Vorderende der Förderleitung ermöglicht.

Nicht dargestellt ist eine Überwachungs- und Meldeeinrichtung, die die Pfropfenbildung am Vorderende der Förderleitung 65 und den Durchtritt von Pulver durch den an die Förderleitung 65 angeschlossenen Einlaß 81 in die Sammelkammer 78 überwacht und meldet. Hierzu können kapazitive oder optische Melder an den entsprechenden Stellen der Förderleitung vorgesehen sein, insbesondere kann es aber auch ausreichen, hierzu einen Druckmesser für den Innendruck der Sammelkammer 76 zu verwenden.

Die Steuereinrichtung 80 kann insbesondere in ein Bedienungspult integriert sein, das auch eine optische Anzeige 81 enthalten kann, die mit den Signalen der entsprechenden Überwachungs- und Meldeeinrichtungen gesteuert wird und den momentanen Betriebszustand der Anlage anzeigt. Um bei Betriebsstörungen deren Ursachen erkennen zu können, kann ein Betriebszustandsspeicher 82 vorgesehen sein, der zumindest für eine vorgegebene Zeit die Betriebsdaten der Vorrichtung, insbesondere also die Überwachungs- und Meldesignale sowie die Steuersignale, speichert und sie im Fall eines ungestörten Betriebes nach der vorgegebenen Mindestzeit wieder löscht, bei Betriebsstörungen aber über diese Zeit hinaus gespeichert und für ein späteres Auslesen und Kontrollieren bereit hält.

Aus Gründen der Übersichtlichkeit sind in Figur 3 die Meßglieder (insbesondere ein Druckmesser in der Abgabestation, der den Druck in der Sammelkammer mißt und dessen Signal dem Anzeigegerät 81 und/oder dem Steuergerät 80 zugeführt ist) weggelassen. Weitere vorteilhafte Meßgeräte können zum Beispiel die Saugleistung der Pumpe 72 und/oder den Druckabfall am Pulverfilter 74 messen. Ein hoher Druckabfall am Pulverfilter 74 zeigt dessen Verstopfung an, und ebenso ist das Pulverfilter 74 oder die Förderleitung 65 verstopft, wenn von der Pumpe 72 nur wenig Fördergas aus der Sammelkammer 78 abgesaugt werden kann. Derartige Verstopfungszustände lösen sich meist durch Fluten der Vorrichtung wie es auch für das regelmäßige Entleeren der Sammelkammer 76 vorgesehen ist, die an ihrem Boden mittels eines Pulverdurchlaßventils 84 gegenüber einer unter ihr angeordneten Auffangkammer 85 druckdicht verschlossen und an der zum Beispiel ein Füllstandsmesser angeordnet ist.

Das Pulverdurchlaßventil kann von einer am Boden rings um die Sammelkammer herumlaufenden Membran 84' gebildet sein, die mittels Druckgas aus einer Druckgasleitung 86 soweit zusammengedrückt werden kann, daß sie den Pulverdurchlaß am Boden der Sammelkammer 78 vakuumdicht verschließt. Auch an der Unterdruckseite (Abgabeseite) des Pulverfilters 74 kann eine Druckgaszuführung 87 vorgesehen sein, wobei ein Mehrwegeventil 88 durch das Steuersignal Y und ein entsprechendes Stellglied so betätigt wird, daß entweder die Druckgasleitung 86 des Pulverdurchlaßventils 84 mit einer Druckgasleitung 90 verbunden ist (dann ist das Pulverdurchlaßventil 84 durch den Druck an der Leitung 90 zusammengedrückt und gesperrt), oder die Druckgasleitung 86 zum Pulverdurchlaßventil ist mit der Druckgaszuführung 87 zum Pulverfilter 74 verbunden, so daß das Druckgas nunmehr aus dem Pulverdurchlaßventil 84 heraus, über das Ventil 88 und durch das Pulverfilter 74 in die Sammelkammer 76 strömt.

Dadurch wird nicht nur die Sammelkammer geflutet, sondern gleichzeitig das Pulverventil 74 von angesaugtem Pulver befreit. Eine direkte Verbindung der Druckgasleitung 90 zur Druckgaszuführung 87 ist beim Dreiwegeventil 88 nicht vorgesehen. Ist vielmehr z.B. im Fall einer Verstopfung eine größere Gasmenge zum Fluten von Sammelkammer und Förderleitung nötig, so wird ihr Druckgas dadurch dosiert zugeführt, indem die Druckgasleitung 86 mehrmals hintereinander durch das Ventil 84 geschlossen und wieder durch das Filter 74 in die Sammelkammer entleert wird.

Vorteilhafte Einzelheiten der Aufnahmestation 60' und der gesamten Vorrichtung, insbesondere auch Abzweigungen, mit denen weitere Aufnahmestationen und/oder Abgabestationen oder auch Auffangstationen für entnommene Proben an die Förderleitung 65 angeschlossen werden können, sind in den gleichzeitig eingereichten Patentanmeldungen "Vorrichtung zur Pulverförderung" und "Vorrichtung mit Abzweigungen zur Pulverförderung" des gleichen Anmelders angegeben, deren Inhalt der Beschreibung der vorliegenden Erfindung zuzurechnen ist.

Figur 4 zeigt den zeitlichen Verlauf des Meßwertes P für den Druck in der Sammelkammer bzw. die Druckdifferenz DP. Ferner ist in Figur 4 jeweils der zeitliche Verlauf von Überwachungs- und Meldesignalen sowie der Steuersignale gezeigt. Mit t0 ist der Zeitpunkt bezeichnet, bei dem das geförderte Pulver die Mündung der Förderleitung in die Sammelkammer durchschritten hat, das heißt das Meldesignal F in den O-Zustand übergeht, und daher die Förderleitung frei ist.

Da bis zu diesem Zeitpunkt das Fördergasventil geöffnet ist (Steuersignal $Z = 1$) würde sich der Unterdruck in der Sammelkammer ausgleichen und der Druck sich dem Druck $p(A)$ in der Fördergaszuleitung (Atmosphärendruck im Handschuhkasten) annähern, wobei sich ein von der Saugleistung der Pumpe und dem Strömungswiderstand in der Förderleitung abhängiger Gleichgewichtswert einstellen würde. Da jedoch zum Zeitpunkt t0 bei weiterlaufender Pumpe (Steuersignal $X = 1$) das Fördergasventil geschlossen wird ($Z = 0$) saugt die Pumpe letztlich lediglich die Förderleitung ab, so daß der Druck zunächst noch über einen oberen Grenzwert Pmax ansteigt, dann aber abfällt. Gleichzeitig wird der Motor der Pulverfräse angelassen (Steuersignal $M = 1$) und somit Pulver in den Ansaugraum transportiert und durch den Unterdruck in das Vorderende der Förderleitung hineingesaugt. Ein dort angeordnetes, optisches oder kapazitives Meßglied kann die Bildung eines entsprechenden Pulverpfropfens überwachen (Überwachungsignal $A = 1$) und zum Zeitpunkt $t_1$ anzeigen, daß der Pulverpfropfen sich auf einer ausreichenden Länge der Förderleitung gebildet hat. Dabei ist der Druck P auf einen Minimalwert Pmin abgesunken.

Nun wird das Fördergasventil geöffnet (Steuersignal $Z = 1$), wobei eine weitere Zufuhr von Pulver durch ein entsprechendes Steuersignal ($M = 0$) an den Motor der Transporteinrichtung unterbrochen wird. Durch den Unterdruck in der Förderleitung wird nun der Pulverpfropfen und Fördergas aus der Fördergaszuleitung angesaugt, wobei der weitere Verlauf des Druckes P unter anderem davon abhängt, ob das Pulver Steigungen oder Gefälle zu überwinden hat. Erreicht das Pulver die Sammelkammer, so kann dies durch ein entsprechendes Meldesignal $F = 1$ erfaßt werden. Das in die Sammelkammer eintretende Pulver und Fördergas führt wieder zu einem Anwachsen des Druckes, der den Wert Pmax überschreitet, so daß sich der Arbeitstakt der Anlage wiederholt, sobald zum Zeitpunkt $t_2$ das gesamte Pulver in die Sammelkammer eingetreten ist.

Während dieses Fördervorgangs ist das Pulverdurchlaßventil am Boden der Sammelkammer auf Sperrung gesteuert (Steuersignal $Y = 0$) und ein Druckgas-Manometer am druckgas-betätigten Pulverdurchlaßventil zeigt an, daß dort der zum Sperren nötige Druck tatsächlich herrscht (Meldesignal $V = 1$). Ein Füllstandsmesser zeigt an, daß das Pulver einen vorgegebenen Füllstand in der Sammelkammer noch nicht erreicht hat (Überwachungssignal $S = 0$).

Das Druck-Meßsignal P gestattet auch eine Überwachung des Betriebszustandes, da daraus Signale $P_A$ und $P_F$ gebildet werden können, die bei $P > P_{max}$ ($P_A = 1$, $P_F = 0$) den entleerten Zustand der Förderleitung angeben (soweit wegen einer Filterverstopfung die Druckdifferenz am Pulverfilter nicht unzulässig groß ist), während bei $P < P_{min}$, (d.h. $P_F = 1$, $P_A = 0$) die Förderleitung durch einen Pfropfen verstopft ist.

Allerdings setzt sich das Pulverfilter beim ständigen Absaugen des Fördergases aus der Sammelkammer allmählich zu. Der zeitliche Verlauf des Sammelkammer-Druckes P ist daher nicht periodisch, sondern verläuft um ein allmählich steigendes Niveau, das anzeigt, daß die Saugpumpe nicht mehr in der Lage ist, einen größeren Unterdruck in der Sammelkammer zu erzeugen. Dieser kritische Zustand kann durch eine Messung des Druckabfalls im durch das Filter gesaugten Fördergas oder der abgesaugten Fördergasmenge angezeigt werden, es kann aber auch der Druck P auf Überschreiten eines zulässigen Höchstwertes (bzw. Unterschreiten eines zulässigen Minimalwertes für die Druckdifferenz DP) überwacht werden. In einem derartigen Fall wird das Fördern unterbrochen.

Eine solche Unterbrechung ist auch dann vorgesehen, wenn das Überwachungssignal des Füllstandsmessers den Wert $S = 1$ erreicht hat. Sobald in diesem Zustand die Fördergasleitung wieder frei ist (Meldesignal $F = 0$, Zeitpunkt $t_3$) wird nun die Pumpe abgeschaltet (Steuersignal $X = 0$), wobei nunmehr, abweichend von den Zeitpunkten $t_0$ und $t_2$, trotz des Signals $F = 0$ die Pulverfräse nicht angelassen wird (es bleibt das Steuersignal $M = 0$ erhalten). Vielmehr wird die Anlage geflutet, was zum Beispiel durch Fluten der Pumpe oder durch Öffnen des Fördergasventils geschehen könnte, jedoch bereits beim Entleeren der Sammelkammer durch Öffnen des Pulverdurchlaßventils (Steuersignal $Y = 1$, Überwachungssignal $V = 0$) geschieht. Das Pulver wird also durch das Pulverdurchlaßventil entleert (Überwachungssignal $S = 0$ des Füllstandsanzeigers) und zum Zeitpunkt $t_4$ wird das Pulverdurchlaßventil wieder gesperrt (Steuersignal $Y = 0$).

Vorteilhaft wird als Förderleitung ein elastischer Schlauch verwendet. Dessen Vorderende gerät durch das angesaugte Fördergas in Vibration. Dadurch kann einerseits die Lage des Pulverpfropfens verfolgt, andererseits einem Festsetzen des Pfropfens entgegengewirkt werden.

In Figur 4 zeigt praktisch eine Koinzidenz bestimmter Flanken der Signale A, F, $P_A$ und $P_F$. Daher können die Zeitpunkte to, t1, t2 zur Bildung der Steuersignale Z, M, X und Y auch aus den entsprechenden Drucksignalen gewonnen werden ohne Verwendung kapazitiver oder induktive Meßglieder.

Die Erfindung ermöglicht also, eine Anlage zur Förderung von sehr unterschiedlichen Pulvern anzugeben, die insbesondere den Bedürfnissen und der Sicherheit bei der Weiterverarbeitung von radioaktivem Pulver für die Herstellung von Brennelementen von Kernreaktoren angepaßt ist.

## Patentansprüche

1. Verfahren zum Fördern von Pulver, insbesondere Kernbrennstoff, von einer Abgabestation durch eine Förderleitung (1) zu einer Auffangstation, wobei

a) in der Abgabestation eine in einen Ansaugraum am Vorderende (2) der Förderleitung (1) mündende Fördergaszuleitung (3) gesperrt und der Ansaugraum mit zu förderndem Pulver gefüllt wird;

b) die Fördergaszuleitung (3) darin geöffnet und in der Förderleitung und einer in der Auffangstation angeordneten Sammelkammer (9) ein gegenüber dem Druck in der Fördergaszuleitung erniedrigter Druck erzeugt wird; und

c) die Fördergaszuleitung geöffnet, in der Sammelkammer der niedrigere Druck aufrechterhalten und das zu fördernde Pulver mittels einer aufrechterhaltenen Druckdifferenz durch die Förderleitung und eine in die Sammelkammer führende Austrittsöffnung an ihrem Hinterende hindurch in die Sammelkammer gefördert wird,

**dadurch gekennzeichnet,** daß mindestens solange in der Abgabestation die Fördergaszuleitung geöffnet gehalten und in der Sammelkammer der niedrige Druck aufrechterhalten wird, bis das zu fördernde Pulver die Austrittsöffnung (13) der Förderleitung (1) erreicht hat.

2. Verfahren nach Anspruch 1, **dadurch gekennzeichnet,** daß Fördergas aus der Sammelkammer (9) über ein Pulverfilter (10) abgeführt wird.

3. Verfahren nach Anspruch 1 oder 2, **dadurch gekennzeichnet,** daß die Druckdifferenz durch eine Pumpe (14) erreicht wird, die auch bei geschlossener Fördergaszuleitung weiterläuft und zum Unterbrechen des Förderns, insbesondere bei Verfahrensstörungen oder bei Erreichen eines vorgegebenen Füllstandes in der Sammelkammer, stillgesetzt wird.

4. Verfahren nach einem der Ansprüche 1 bis 3, **dadurch gekennzeichnet,** daß die Sammelkammer (76) über ein Pulverfilter (74) abgesaugt und in der Fördergaszuleitung (68) der Atmosphärendruck in der Abgabestation verwendet wird (Figur 3).

5. Verfahren nach einem der Ansprüche 1 bis 4, **dadurch gekennzeichnet,** daß am Boden eines Pulver (31) enthaltenden Abgabebehälters (26) in der Abgabestation das den Pfropfen bildende Pulver mechanisch entnommen und zum Ansaugraum (29) der Förderleitung (30) transportiert wird (Figur 2, Figur 3).

6. Verfahren nach der Kombination der Ansprüche 4 und 5, **dadurch gekennzeichnet,** daß im Abgabebehälter (26) der Atmosphärendruck der Abgabestation aufrechterhalten wird.

7. Verfahren nach einem der Ansprüche 1 bis 5, **dadurch gekennzeichnet,** daß ein Überwachungssignal (A) abgegeben wird, wenn der Ansaugraum (29) mit Pulver gefüllt ist, und daß mit einem Steuersignal (Z) ein Fördergasventil (35) in der Fördergaszuleitung geöffnet wird.

8. Verfahren nach einem der Ansprüche 1 bis 7, **dadurch gekennzeichnet,** daß ein Meldesignal (F) abgegeben wird, wenn zu förderndes Pulver bis zum Hinterende der Förderleitung gefördert ist und daß mit dem Meldesignal ein Fördergasventil in der Fördergaszuleitung gesperrt wird.

9. Verfahren nach der Kombination der Ansprüche 6 und 7, **dadurch gekennzeichnet,** daß der Druck in der Sammelkammer (21) gemessen und ein dem Druck entsprechendes Meßsignal (P) gebildet wird.

10. Verfahren nach Anspruch 9, **dadurch gekennzeichnet,** daß zumindest mit dem Meßsignal und dem Steuersignal eine optische Betriebszustandsanzeige (39) gesteuert wird.

11. Verfahren nach Anspruch 9, **dadurch gekennzeichnet,** daß zumindest das Meßsignal (P) und das Steuersignal (Z) in einen Speicher (40) eingelesen wird, daß die eingelesenen Daten jeweils für eine vorgegebene Mindestzeit gespeichert werden und daß die Mindestzeit bei Stillsetzung des Förderns verlängert wird.

**12.** Verfahren nach einem der Ansprüche 9 bis 11, **dadurch gekennzeichnet,** daß bei Überschreiten eines oberen Grenzwertes und/oder bei Unterschreiten eines unteren Grenzwertes für den Druck in der Sammelkammer das Fördern des Pulvers stillgesetzt und der Druckunterschied zwischen der Sammelkammer und der Fördergaszuleitung ausgeglichen wird.

**13.** Verfahren nach einem der Ansprüche 1 bis 12, **dadurch gekennzeichnet,** daß durch die Förderleitung in die Sammelkammer eingeströmtes Fördergas über ein Pulverfilter aus dem Sammelbehälter entfernt wird und daß gelegentlich, insbesondere bei einem hohen Druckabfall am Pulverfilter, das Fördern des Pulvers unterbrochen und das Pulverfilter in umgekehrter Strömungsrichtung mit Druckgas durchspült wird.

**14.** Verfahren nach einem der Ansprüche 1 bis 13, **dadurch gekennzeichnet,** daß beim Fördern das Pulver durch das Hinterende der Förderleitung hindurch in einen oberen Teil der Sammelkammer geleitet und ein am Boden der Sammelkammer angeordnetes Pulverdurchlaßventil, das die Sammelkammer von einer darunterliegenden Auffangkammer trennt, geschlossen gehalten wird, und gelegentlich, insbesondere bei Erreichen eines vorgegebenen Füllstandes, das Fördern unterbrochen und durch Öffnen des Pulverdurchlaßventils das in der Sammelkammer enthaltene Pulver in die Auffangkammer befördert wird.

**15.** Verfahren nach der Kombination der Ansprüche 13 und 14, **dadurch gekennzeichnet,** daß das Pulverdurchlaßventil mit Druckgas gesperrt und beim Öffnen des Pulverdurchlaßventils das zum Sperren verwendete Druckgas zum Spülen des Pulverfilters benutzt wird.

**16.** Vorrichtung zum Fördern von Pulver von einer Abgabestation zu einer Auffangstation mit
a) einer Förderleitung (1) zwischen der Abgabestation und der Auffangstation,
b) einem an das Vorderende der Förderleitung angeschlossenen Ansaugraum (2) mit einer ein Absperrventil (4) enthaltenden Fördergaszuleitung (3) in der Abgabestation, und Mitteln (5, 6) zum Füllen des Ansaugraumes mit zu förderndem Pulver,
c) einer Sammelkammer (9), die an einem oberen Teil eine ein Pulverfilter (10) enthaltende Gas-Ableitung (11) und einen an ein Hinterende (12) der Förderleitung (1) angeschlossenen Durchlaß (13) aufweist, in der Aufnahmestation,
d) einer Pumpe (14) zur Erzeugung und Aufrechterhaltung einer Druckdifferenz zwischen dem Druck am Absperrventil (4) der Fördergaszuleitung und dem Druck in der Sammelkammer und e) einer Steuereinrichtung (15) zum Betätigen des Absperrventils (4),
**gekennzeichnet dadurch** Mittel (16, 17), die das Füllen des Ansaugraums überwachen und den Durchtritt von Pulver durch den Durchlaß zur Sammelkammer melden, wobei diese Mittel ein Überwachungs- und Meldesignal erzeugen, das der Steuereinrichtung zugeführt ist und die Fördergaszuleitung offen hält, solange zu förderndes Pulver nicht durch den Durchlaß durchgetreten ist.

**17.** Vorrichtung nach Anspruch 16, **dadurch gekennzeichnet,** daß die Mittel zum Füllen des Ansaugraums (29) von einem Motor (32) mechanisch bewegte Teile enthalten, die Pulver vom Boden eines Pulver (31) enthaltenden Abgabebehälters (26) zum Ansaugraum (29) transportieren.

**18.** Vorrichtung nach Anspruch 17, **dadurch gekennzeichnet,** daß der Abgabebehälter zur Atmospäre der Abgabestation hin geöffnet ist, insbesondere mittels eines Frischgasfilters (25) im oberen Teil des Abgabebehälters (26).

**19.** Vorrichtung nach einem der Ansprüche 16 bis 18, **dadurch gekennzeichnet,** daß die Pumpe (72) in der Auffangstation (60') angeordnet und mit einer Saugleitung (73) an die Abgabeseite des Pulverfilters angeschlossen ist.

**20.** Vorrichtung nach einem der Ansprüche 16 bis 19, **dadurch gekennzeichnet,** daß die Abgabestation in einem ersten Handschuhkasten, die Auffangstation in einem zweiten Handschuhkasten angeordnet und die Handschuhkästen über eine Druckausgleichsleitung miteinander verbunden sind.

**21.** Vorrichtung nach einem der Ansprüche 16 bis 20, **dadurch gekennzeichnet,** daß die Fördergaszuleitung mit einem Ende zur Atmosphäre der Abgabestation hin, die Pumpe mit ihrem Auslaß zur Atmosphäre der Auffangstation hin offen sind.

**22.** Vorrichtung nach einem der Ansprüche 16 bis 21, **dadurch gekennzeichnet,** daß in der Auffangstation ein Druckmesser für den Druck in der Sammelkammer angeordnet ist, dessen Signal einem Anzeigegerät und/oder der Steuereinrichtung zugeführt ist.

23. Vorrichtung nach einem der Ansprüche 16 bis 22, **dadurch gekennzeichnet,** daß eine optische Anzeige vorgesehen ist, die mit Signalen der Mittel zum Überwachen und Melden gesteuert wird und den Betriebszustand der Vorrichtung anzeigt.

24. Vorrichtung nach einem der Ansprüche 16 bis 23, **dadurch gekennzeichnet,** daß ein Betriebszustandsspeicher vorgesehen ist, der mindestens für eine vorgegebene Zeit Betriebsdaten der Vorrichtung speichert.

25. Vorrichtung nach einem der Ansprüche 16 bis 24, **dadurch gekennzeichnet,** daß das Pulverfilter auf seiner Abgabeseite eine Druckgaszuführung aufweist.

26. Vorrichtung nach einem der Ansprüche 16 bis 25, **dadurch gekennzeichnet,** daß an der Sammelkammer ein Füllstandsmesser angeordnet ist.

27. Vorrichtung nach einem der Ansprüche 16 bis 26, **dadurch gekennzeichnet,** daß die Sammelkammer über einer Auffangkammer angeordnet und an ihrem Boden mittels eines Pulverdurchlaßventils gegenüber der Auffangkammer druckdicht verschließbar ist.

28. Vorrichtung nach der Kombination der Ansprüche 25 und 27, **dadurch gekennzeichnet,** daß eine Druckleitung zum Schließen des Pulverdurchlaßventils über ein Mehrwegeventil an das Pulverdurchlaßventil und alternativ an eine Druckgasleitung oder die Druckgaszuführung zum Pulverfilter anschließbar ist.

29. Vorrichtung nach einem der Ansprüche 16 bis 28, **dadurch gekennzeichnet,** daß der Pulverfilter aus einem mehrschichtigen Gewebe gefertigt ist und topfförmig in das Innere der Sammelkammer ragt.

30. Vorrichtung nach Anspruch 29, **dadurch gekennzeichnet,** daß der ins Innere der Sammelkammer ragende Boden des topfartigen Pulverfilters mehrfach gefaltet ist.

31. Vorrichtung nach Anspruch 29 oder 30, **dadurch gekennzeichnet,** daß der Rand des topfartigen Pulverfilters mittels eines dauerelastischen Kunststoffs zu einem Flansch vergossen ist, der in die Seitenwand der Sammelkammer längs ihres Umfangs eingepaßt ist.

32. Vorrichtung nach einem der Ansprüche 16 bis 31, **dadurch gekennzeichnet,** daß die Förderleitung aus einem elastischen Schlauch gefertigt ist.

## Claims

1. Method for transporting powder, in particular nuclear fuel, from a distributing station to a receiving station by means of a conveyor pipeline (1), wherein

    (a) in the distributing station, a delivery gas supply line (3) opening into a suction space at the front end (2) of the conveyor pipeline (1) is isolated and the suction space is filled with powder to be transported;

    (b) the delivery gas supply line (3) is then opened and a reduced pressure relative to the pressure in the delivery gas supply line is generated in the conveyor pipeline and in a collecting chamber (9) arranged in the receiving station; and

    (c) the delivery gas supply line is open, the lower pressure is maintained in the collecting chamber and the powder to be transported is conveyed by means of a maintained pressure difference into the collecting chamber through the conveyor pipeline and through an outlet at its rear end leading into the collecting chamber, characterised in that the delivery gas supply line in the distributing station is kept open and the low pressure is maintained in the collecting chamber at least until the powder to be transported has reached the outlet (13) of the conveyor pipeline (1).

2. Method according to claim 1, characterised in that delivery gas is carried away from the collecting chamber (9) by way of a powder filter (10).

3. Method according to claim 1 or 2, characterised in that the pressure difference is achieved by means of a pump (14) which continues to run even when the delivery gas supply line is closed and which is shut down in order to interrupt transportation, in particular in the case of disturbances of the process or when a preselected full condition is reached in the collecting chamber.

4. Method according to one of claims 1 to 3, characterised in that the collecting chamber (76) is exhausted by way of a powder filter (74) and the atmospheric pressure in the distributing station is used in the delivery gas supply line (68) (Figure 3).

5. Method according to one of claims 1 to 4, characterised in that, in the distributing station, on the base of a distributing container (26) containing powder (31), the powder forming the plug is removed mechanically and transported to the suction space (29) of the conveyor pipeline (30) (Figure 2, Figure 3).

6. Method according to a combination of claims 4 and 5, characterised in that the atmospheric pressure of the distributing station is maintained in the distributing container (26).

7. Method according to one of claims 1 to 5, characterised in that a monitoring signal (A) is delivered when the suction space (29) is filled with powder, and in that a delivery gas valve (35) in the delivery gas supply line is opened by means of a control signal (Z).

8. Method according to one of claims 1 to 7, characterised in that a status signal (F) is delivered when powder to be transported is conveyed as far as the rear end of the conveyor pipeline, and in that a delivery gas valve in the delivery gas supply line is isolated by means of the status signal.

9. Method according to a combination of claims 6 and 7, characterised in that the pressure in the collecting chamber (21) is measured and a measuring signal (P) corresponding to the pressure is generated.

10. Method according to claim 9, characterised in that an optical operational status readout (39) is controlled at least by means of the measuring signal and the control signal.

11. Method according to claim 9, characterised in that at least the measuring signal (P) and the control signal (Z) are read into a memory (40), in that the read-in data are stored for a preselected minimum time in each case and in that the minimum time is extended when transportation is stopped.

12. Method according to one of claims 9 to 11, characterised in that the transportation of powder is stopped and the pressure difference between the collecting chamber and the delivery gas supply line is balanced out when the pressure in the collecting chamber exceeds an upper limiting value and/or falls below a lower limiting value.

13. Method according to one of claims 1 to 12, characterised in that delivery gas which has flowed through the conveyor pipeline and into the collecting chamber is removed from the collecting container by way of a powder filter and in that occasionally, in particular in the case of a large drop in pressure at the powder filter, transportation of powder is interrupted and the powder filter is thoroughly rinsed with compressed gas in the reverse direction of flow.

14. Method according to one of claims 1 to 13, characterised in that, during transportation, the powder is passed through the rear end of the conveyor pipeline and into an upper part of the collecting chamber, and a powder outlet valve, which is arranged on the base of the collecting chamber and which separates the collecting chamber from a receiving chamber located beneath it, is kept closed and occasionally, in particular when a preselected full condition is reached, transportation is interrupted and the powder contained in the collecting chamber is transported into the receiving chamber by opening the powder outlet valve.

15. Method according to a combination of claims 13 and 14, characterised in that the powder outlet valve is closed by means of compressed gas and, when the powder outlet valve is opened, the compressed gas used for closing is utilised for rinsing the powder filter.

16. Apparatus for transporting powder from a distributing station to a receiving station, having

(a) a conveyor pipeline (1) between the distributing station and the receiving station,
(b) a suction space (2) which is connected to the front end of the conveyor pipeline and has, in the distributing station, a delivery gas supply line (3) comprising a stop valve (4), and means (5, 6) for filling the suction space with powder to be transported,
(c) a collecting chamber (9) which has, on an upper part, a gas outlet (11) comprising a powder filter (10) and an outlet (13) connected to the rear end (12) of the conveyor pipeline (1), in the receiving station,
(d) a pump (14) for generating and maintaining a pressure difference between the pressure at the stop valve (4) of the delivery gas supply line and the pressure in the collecting chamber, and
(e) a control device (15) for actuating the stop valve (4), characterised by means (16, 17) which monitor the filling of the suction space and signal the passage of powder through the outlet towards the collecting chamber, wherein these means generate a monitoring and status signal which is supplied to the control device and keeps the delivery gas supply line open as long as powder for transportation has not passed through the outlet.

17. Apparatus according to claim 16, characterised in that the means for filling the suction space (29) comprise parts which are moved mechanically by a motor (32) and which transport powder from the base of a distributing container (26) containing powder (31) to the suction space (29).

18. Apparatus according to claim 17, characterised in that the distributing container is open towards the atmosphere of the distributing station, in particular by means of a fresh gas filter (25) in the upper part of the distributing container (26).

19. Apparatus according to one of claims 16 to 18, characterised in that the pump (72) is arranged in the receiving station (60') and, together with a suction pipe (73), is connected to the delivery side of the powder filter.

20. Apparatus according to one of claims 16 to 19, characterised in that the distributing station is arranged in a first compartment, the receiving station is arranged in a second compartment and the compartments are connected together by way of a pressure compensation pipeline.

21. Apparatus according to one of claims 16 to 20, characterised in that one end of the delivery gas supply line is open towards the atmosphere of the distributing station, and the outlet of the pump is open towards the atmosphere of the receiving station.

22. Apparatus according to one of claims 16 to 21, characterised in that a pressure gauge for the pressure in the collecting chamber is arranged in the receiving station, the signal from the pressure gauge being supplied to a readout device and/or to the control device.

23. Apparatus according to one of claims 16 to 22, characterised in that there is provided an optical readout which is controlled by means of signals from the means for monitoring and signalling and indicates the operational status of the apparatus.

24. Apparatus according to one of claims 16 to 23, characterised in that there is provided an operational status memory which stores operational data of the apparatus at least for a preselected time.

25. Apparatus according to one of claims 16 to 24, characterised in that the powder filter has a compressed gas supply on its delivery side.

26. Apparatus according to one of claims 16 to 25, characterised in that a full condition gauge is arranged on the collecting chamber.

27. Apparatus according to one of claims 16 to 26, characterised in that the collecting chamber is arranged above a receiving chamber and can be closed against the receiving chamber in a pressure-sealed manner at its base by means of a powder outlet valve.

28. Apparatus according to a combination of claims 25 and 27, characterised in that a pressure pipe for closing the powder outlet valve can be connected by way of a multi-way valve to the powder outlet valve and, as an alternative, to a compressed gas pipe or to the compressed gas supply to the powder filter.

29. Apparatus according to one of claims 16 to 28, characterised in that the powder filter is manufactured from a multi-layer fabric and projects in the shape of a pot into the inside of the collecting chamber.

30. Apparatus according to claim 29, characterised in that the base of the pot-shaped powder filter that projects into the inside of the collecting chamber has multiple folds.

31. Apparatus according to claim 29 or 30, characterised in that the edge of the pot-shaped powder filter is cast to form a flange using a permanently elastic plastics material, which flange is fitted into the side wall of the collecting chamber along its periphery.

32. Apparatus according to one of claims 16 to 31, characterised in that the conveyor pipeline is manufactured from an elastic hose.

**Revendications**

1. Procédé de transport, de poudre, notamment de poudre de combustible nucléaire, d'un poste d'envoi à un poste de réception, en passant par un conduit de transport (1), selon lequel
   a) dans le poste d'envoi, on ferme un conduit (3) d'amenée du gaz d'entraînement, qui débouche dans une chambre d'aspiration à l'extrémité avant (2) du conduit de transport (1) et on remplit la chambre d'aspiration de la poudre à transporter ;

b) on ouvre ensuite le conduit (3) d'amenée du gaz d'entraînement et on produit, dans le conduit de transport et dans une chambre collectrice (9) prévue dans le poste de réception, une pression réduite par rapport à la pression régnant dans le conduit d'amenée du gaz d'entraînement; et

c) on ouvre le conduit d'amenée du gaz d'entraînement, on maintient la pression plus basse dans la chambre collectrice, et la poudre à entraîner est entraînée jusque dans la chambre collectrice, au moyen d'une différence de pression maintenue, par l'intermédiaire du conduit de transport et d'une ouverture de sortie, qui débouche dans la chambre collectrice, à son extrémité arrière,

caractérisé par le fait qu'on maintient le conduit d'amenée du gaz d'entraînement ouvert dans le poste d'envoi et la pression basse dans la chambre collectrice au moins jusqu'à ce que la poudre à entraîner ait atteint l'orifice de sortie (13) du conduit d'entraînement (1).

2. Procédé suivant la revendication 1, caractérisé par le fait que le gaz d'entraînement est évacué de la chambre collectrice (9) par l'intermédiaire d'un filtre à poudre (10).

3. Procédé suivant la revendication 1 ou 2, caractérisé par le fait que la différence de pression est établie par une pompe (14), qui continue à fonctionner même lorsque le conduit d'amenée de gaz d'entraînement est fermée, et est arrêtée, afin d'interrompre l'entraînement, notamment dans le cas de perturbations dans le procédé ou lorsqu'un niveau de remplissage prescrit est atteint dans la chambre collectrice.

4. Procédé suivant les revendications 1 à 3, caractérisé par le fait que l'aspiration dans la chambre collectrice (76) est exécutée à travers un filtre à poudre (74) et que la pression atmosphérique régnant dans le poste d'envoi est utilisée dans le conduit (68) d'amenée du gaz d'entraînement (figure3).

5. Procédé suivant les revendications 1 à 4, caractérisé par le fait que la poudre, qui forme le bouchon, est retirée mécaniquement du fond d'un récipient d'envoi (26), qui contient la poudre (31), dans le poste d'envoi et est entraînée en direction de la chambre d'aspiration (29) du conduit d'entraînement (30) (figure 2, figure 3).

6. Procédé selon la combinaison des revendications 4 et 5, caractérisé par le fait que la pression atmosphérique du poste d'envoi est maintenue dans le récipient d'envoi (26).

7. Procédé suivant les revendications 1 à 5, caractérisé par le fait qu'un signal de contrôle (A) est envoyé lorsque la chambre d'aspiration (29) est remplie de poudre, et qu'une vanne (35) pour le gaz d'entraînement, qui est située dans le conduit d'amenée du gaz d'entraînement, est ouverte par un signal de commande (Z).

8. Procédé suivant les revendications 1 à 7, caractérisé par le fait qu'un signal de signalisation (F) est envoyé lorsque de la poudre à entraîner est entraînée jusqu'à l'extrémité arrière du conduit d'entraînement et qu'une vanne pour le gaz d'entraînement, qui est située dans le conduit d'amenée du gaz d'entraînement, est fermée par le signal de signalisation.

9. Procédé suivant la combinaison des revendications 6 et 7, caractérisé par le fait que la pression dans la chambre collectrice (21) est mesurée et qu'un signal de mesure (P) correspondant à la pression est formé.

10. Procédé suivant la revendication 9, caractérisé par le fait qu'un dispositif d'affichage optique (39) de l'état de fonctionnement est commandé au moins par le signal de mesure et par le signal de commande.

11. Procédé suivant la revendication 9, caractérisé par le fait qu'au moins le signal de mesure (P) et le signal de commande (Z) sont introduits dans une mémoire (4), que les données introduites sont mémorisées respectivement pendant un intervalle de temps minimum prédéterminé et que l'intervalle de temps minimum est prolongé lors de l'arrêt de l'entraînement.

12. Procédé suivant les revendications 9 à 11, caractérisé par le fait que si la pression dans la chambre collectrice devient supérieure à une valeur limite supérieure et/ou inférieure à une valeur limite inférieure, l'entraînement de la poudre est arrêtée et la différence de pression entre la chambre collectrice et le conduit d'amenée du gaz d'entraînement est compensée.

13. Procédé suivant les revendications 1 à 12, caractérisé par le fait que du gaz d'entraînement, introduit dans la chambre collectrice par l'intermédiaire du conduit d'entraînement, est retiré du réservoir collecteur par l'intermédiaire d'un filtre à poudre et que éventuellement, notamment dans le cas d'une grande perte de charge dans le filtre à poudre, l'entraînement de la poudre est interrompu et le filtre à poudre est balayé par un gaz comprimé en sens inverse du sens d'écoulement.

14. Procédé suivant les revendications 1 à 13, caractérisé par le fait que lors de l'entraînement, la poudre est envoyée en passant par l'extrémité arrière du conduit d'entraînement, dans une partie supérieure de la chambre collectrice et qu'une vanne de passage de la poudre, qui est disposée dans le fond de la chambre collectrice et qui la sépare d'une chambre de réception sous-jacente, est maintenue fermée et éventuellement, notamment lorsqu'un niveau de remplissage prescrit est atteint, l'entraînement est interrompu et, sous l'effet de l'ouverture de la vanne de passage de la poudre, la poudre contenue dans la chambre collectrice est entraînée dans la chambre de réception.

15. Procédé suivant la combinaison des revendications 13 et 14, caractérisé par le fait que la vanne de passage de la poudre est fermée par du gaz comprimé et, lors de l'ouverture de la vanne de passage de la poudre, le gaz comprimé utilisé pour la fermeture est utilisé pour balayer le filtre à poudre.

16. Dispositif pour entraîner de la poudre d'un poste d'envoi à un poste de réception, comportant
    a) un conduit de transport (1) entre le poste d'envoi et le poste de réception,
    b) une chambre d'aspiration (2) raccordée à l'extrémité avant du conduit d'entraînement et comportant un conduit (3) d'amenée du gaz d'entraînement, ayant une vanne d'arrêt (4), au poste d'envoi et des moyens (5,6) pour remplir la chambre d'aspiration de la poudre à entraîner,
    c) une chambre collectrice (9), qui comporte, dans une partie supérieure, un conduit (11) d'évacuation du gaz, ayant un filtre à poudre (10), et un passage (13), qui est raccordé à une extrémité arrière (12) du conduit de transport (1), dans le poste de réception,
    d) une pompe (14) servant à produire et maintenir une différence de pression entre la pression à la vanne d'arrêt (4) du conduit d'amenée du gaz d'entraînement et la pression régnant dans la chambre collectrice, et
    e) un dispositif de commande (15) pour actionner la vanne d'arrêt (4), caractérisé par des moyens (16,17), qui contrôlent le remplissage de la chambre d'aspiration et signalent le passage de la poudre dans le passage aboutissant à la chambre collectrice, ces moyens produisant un signal de contrôle et de signalisation, qui est envoyé au dispositif de commande et maintient ouvert le conduit d'amenée du gaz d'entraînement, tant que de la poudre à entraîner n'a pas passé dans le passage.

17. Dispositif suivant la revendication 16, caractérisé par le fait que les moyens pour remplir la chambre d'aspiration (29) comportent des parties, qui sont déplacées mécaniquement par un moteur (32) et qui transportent la poudre du fond d'un récipient d'envoi (26) contenant de la poudre (31), à la chambre d'aspiration (29).

18. Dispositif suivant la revendication 17, caractérisé par le fait que le récipient d'envoi est ouvert à l'atmosphère du poste d'envoi, notamment au moyen d'un filtre (25) à gaz frais placé dans la partie supérieure du récipient d'envoi (26).

19. Dispositif suivant l'une des revendications 16 à 18, caractérisé par le fait que la pompe (72) est disposée dans le poste de réception (60') et est raccordée par un conduit d'aspiration (73) au côté de sortie du filtre à poudre.

20. Dispositif suivant l'une des revendications 16 à 19, caractérisé par le fait que le poste d'envoi est disposé dans une première boîte à gants, que le poste de réception est disposé dans une seconde boîte à gants et que les boîtes à gants communiquent entre elles par l'intermédiaire d'un conduit de compensation de la pression.

21. Dispositif suivant l'une des revendications 16 à 20, caractérisé par le fait qu'une extrémité du conduit d'amenée du gaz d'entraînement débouche dans l'atmosphère du poste d'envoi et que la sortie de la pompe débouche dans l'atmosphère du poste de réception.

22. Dispositif suivant l'une des revendications 16 à 21, caractérisé par le fait que dans le poste de réception est disposé un manomètre servant à mesurer la pression régnant dans la chambre collectrice et dont le signal est envoyé à un appareil d'affichage et/ou au dispositif de commande.

**23.** Dispositif suivant l'une des revendications 16 à 22, caractérisé par le fait qu'il est prévu un dispositif d'affichage optique, qui est commandé par des signaux des moyens de contrôle et de signalisation et indique l'état de fonctionnement du dispositif.

**24.** Dispositif suivant l'une des revendications 16 à 23, caractérisé par le fait qu'il est prévu une mémoire d'états de fonctionnement, qui mémorise les données de fonctionnement du dispositif au moins pendant un intervalle de temps prédéterminé.

**25.** Dispositif suivant l'une des revendications 16 à 24, caractérisé par le fait que le filtre à poudre comporte, sur son côté de sortie, une arrivée de gaz comprimé.

**26.** Dispositif suivant l'une des revendications 16 à 25, caractérisé par le fait qu'un appareil de mesure du niveau de remplissage est prévu dans la chambre collectrice.

**27.** Dispositif suivant l'une des revendications 16 à 26, caractérisé par le fait que la chambre collectrice est disposée au-dessus d'une chambre de réception et peut être fermée sur son fond, d'une manière étanche à la pression, par rapport à la chambre de réception, à l'aide d'une vanne de passage de la poudre.

**28.** Dispositif suivant la combinaison des revendications 25 à 27, caractérisé par le fait qu'un conduit sous pression destiné à fermer la vanne de passage de poudre peut être raccordé par l'intermédiaire d'une vanne à plusieurs voies à la vanne de passage de poudre et, sinon, à un conduit de gaz comprimé ou à l'arrivée de gaz comprimé aboutissant au filtre à poudre.

**29.** Dispositif suivant l'une des revendications 16 à 28, caractérisé par le fait que le filtre à poudre est réalisé en un tissu formé de nappes multiples et pénètre, avec une forme de pot, à l'intérieur de la chambre collectrice.

**30.** Dispositif suivant la revendication 29, caractérisé par le fait que le fond, qui pénètre à l'intérieur de la chambre collectrice, du filtre à poudre en forme de pot est replié de plusieurs fois.

**31.** Dispositif suivant la revendication 29 ou 30, caractérisé par le fait que le bord du filtre à poudre en forme de pot est formé par moulage d'une matière plastique à élasticité permanente de manière à former une bride qui est insérée dans la paroi latérale de la chambre collectrice, le long de son pourtour.

**32.** Dispositif suivant l'une des revendications 16 à 31, caractérisé par le fait que le conduit d'entraînement est formée d'un tuyau souple élastique.

FIG 1

FIG 2

FIG 3

FIG 4